# EUROPÄISCHE PATENTSCHRIFT

(11) **EP 2 358 822 B1**
(45) Veröffentlichungstag und Bekanntmachung des Hinweises auf die Patenterteilung: **24.07.2013**
(21) Anmeldenummer: 09778445.8
(22) Anmeldetag: 10.09.2009
(51) Int. Cl.: C09D 4/00

(54) **KRATZFESTBESCHICHTETE POLYCARBONATE MIT HOHER TRANSPARENZ, VERFAHREN ZU DEREN HERSTELLUNG UND DEREN VERWENDUNG**
HIGH-TRANSPARENCY POLYCARBONATES WITH SCRATCH-RESISTANT COATING, PROCESS FOR PRODUCTION THEREOF AND USE THEREOF
POLYCARBONATES À REVÊTEMENT RÉSISTANT AUX ÉRAFLURES QUI PRÉSENTENT UNE GRANDE TRANSPARENCE, LEUR PROCÉDÉ DE FABRICATION ET LEUR UTILISATION

(30) Priorität: 15.11.2008 DE 102008057524
(43) Veröffentlichungstag der Anmeldung: 24.08.2011
(73) Patentinhaber: BASF Coatings GmbH, 48165 Münster (DE)
(72) Erfinder: GROENEWOLT, Matthijs, 48147 Münster (DE); KUES, Jan-Bernd, 48155 Münster (DE); SCHROEDER, Stefanie, 48249 Dülmen (DE); CAVALEIRO, Pedro, 41749 Viersen (DE); KARMINSKI, Hans-Leo, 45134 Essen (DE); MICHAEL, Günther, 63791 Karlstein (DE)
(74) Vertreter: Leifert & Steffan
(86) Internationale Anmeldenummer: PCT/EP2009/006563
(87) Internationale Veröffentlichungsnummer: WO 2010/054711

(56) Entgegenhaltungen:
- WO-A-01/66653
- WO-A-02/24344
- WO-A-03/016411
- WO-A-03/044099
- WO-A-2005/056697
- WO-A-2006/028518
- WO-A-2006/079543
- WO-A-2008/068154
- WO-A-2009/118415
- DE-A1- 10 004 499
- DE-A1-102006 020 987
- US-A1- 2002 111 390
- US-A1- 2007 281 140

## Beschreibung

Die vorliegende Erfindung betrifft ein Verfahren zur Beschichtung von Polycarbonatsubstraten, bei dem ein Beschichtungsmittel umfassend (A) mindestens ein strahlungshärtendes Bindemittel, (B) Nanopartikel und (C) ggf. Lösemittel, auf ein Polycarbonatsubstrat appliziert wird, hierfür geeignete Beschichtungsmittel sowie die durch das Verfahren erhältlichen beschichteten Polycarbonatsubstrate.

Als Ersatzmaterialien für Gläser, beispielsweise zur Produktion von Platten, Fenstern, Brillengläsern, optischen Linsen oder Automobil- und Flugzeugscheiben werden seit einigen Jahren vermehrt transparente Kunststoffe eingesetzt. Etabliert haben sich insbesondere Kunststoffe auf der Basis von Polycarbonaten und Polymethylmethacrylaten.

Die Verwendung derartiger Kunststoffe ist insbesondere für den Automobilbereich interessant, da sich mittels der Kunststoffe Formen realisieren lassen, die mit Glas als Werkstoff nicht oder nur mit unvertretbar hohem Aufwand realisiert werden können. So hat sich Polycarbonat beispielsweise schnell zur "Verglasung" von Automobilscheinwerfern durchgesetzt.

Neben der leichten Verformbarkeit liegt der Vorteil von Kunststoffen wie Polycarbonat nicht zuletzt auch darin, dass die Kunststoffe eine im Vergleich zu Glas wesentlich geringere spezifische Dichte aufweisen und so beispielsweise das Fahrzeuggewicht deutlich reduziert werden kann.

Polycarbonat ist zudem zähelastischer als Glas und kann daher Stöße mit Steinen durch Energiedissipation besser abfangen. Nachteilig wirkt sich bei Kunststoffen allerdings die im Vergleich zu Glas geringere Härte aus. Dadurch resulitiert eine geringere Beständigkeit gegenüber externen mechanischen Beschädigungen und somit eine geringere Kratzfestigkeit und eine geringere Abriebfestigkeit. Es ist daher insbesondere für den Einsatz derartiger Materialien in stark beanspruchenden Umgebungen notwendig, diese gegen Abrieb und Verkratzen zu schützen.

Gerade im Bereich der Automobilverglasung bestehen jedoch hohe Anforderungen, die durch die Normen ECE 43, ASTM 1044, ASTM 1003 festgelegt sind.

Zur Beschichtung von Polycarbonat mit einer kratzfesten Schicht, die im Abrasions-Test (geprüft mittels des Taber-Tests) hervorragende Ergebnisse aufweist, können Polymersysteme mit unterschiedlicher Zusammensetzung eingesetzt werden.

Für diesen Zweck werden verschiedentlich Sol-Gel-Systeme u.a. auch mit Hilfe von Plasma-Verfahren eingesetzt. Diese Systeme werden häufig aus modifizierten Silanen und Alkoxiden durch Hydrolyse- und Kondensationsprozesse hergestellt. Aufgrund der Reaktivität dieser Systeme ist die Lagerstabilität der Lackmischung meist sehr kurz. Zudem erschwert die Stabilität in solchen Systemen zumeist die Einstellung höherer Festkörper.

Außerdem werden auch strahlungshärtbare Beschichtungsmittel zur Beschichtung von Polycarbonatsubstraten eingesetzt. So werden in der US-A-6,420,451 strahlungshärtbare Beschichtungsmittel für die Beschichtung von optischen Substraten, beispielsweise Linsen, aus verschiedenen Kunststoffsubstraten, wie beispielsweise Polycarbonat, beschrieben. Die Beschichtungsmittel enthalten neben monofunktionellen Acrylaten Urethanacrylate und kolloidale Metalloxide, insbesondere SiO₂-Teilchen. Diese Beschichtungsmittel führen aufgrund ihres Gehaltes an Metalloxidteilchen zu Beschichtungen mit einer verbesserten Kratzfestigkeit und weisen außerdem eine gute Haftung auf verschiedenen Substraten sowie eine gute Kompatibilität zu antireflektierenden Beschichtungen im Falle der Beschichtung von optischen Linsen auf. Um dieTransparenz zu gewährleisten, ist im Allgemeinen die Partikelgröße von Teilchen klein gegen die Wellenlänge des sichtbaren Lichtes zu wählen, so dass in diesen Beschichtungsmitteln nanoskalige Metalloxide eingesetzt werden, die kleine Partikelgröße zwischen 2 und 60 nm, bevorzugt zwischen 5 und 50 nm, aufweisen. Derartige Nanopartikel werden im Allgemeinen nasschemisch hergestellt und sind preislich oberhalb flammpyrolytisch hergestellter Siliciumdioxid-Teilchen anzusiedeln.

Handelsübliche Nanopartikel auf Basis pyrogen hergestellter Kieselsäure dagegen sind wesentlich preisgünstiger, so dass es durchaus wünschenswert ist, in Beschichtungsmitteln für die Beschichtung von Polycarbonatsubstraten die beispielsweise in der US-A-6,420,451 verwendeten, speziellen Nanopartikel durch derartige Nanopartikel auf Basis pyrogen hergestellter Kieselsäure zu ersetzen. Die entsprechenden Nanopartikel weisen aber meist wesentlich größer mittlere Partikelgrößen auf und führen daher im Allgemeinen nicht zu transparenten Beschichtungen.

Weiterhin sind in der WO 2006/028518 A2 UV härtbare Beschichtungsmittel beschrieben, die mindestens ein strahlungshärtbares (Meth)Acrylat, anorganische Teilchen mit einer Partikelgröße zwischen 1 und 1000 nm und ggf. Reaktivverdünner enthalten. Bevorzugt werden oberflächenmodifizierte SiO₂-Nanopartikel mit einer Partikelgröße von 5 bis 80 nm, insbesondere kleiner als 50nm, und mit einer engen Partikelgrößenverteilung, eingesetzt. Diese Beschichtungsmittel werden zur Herstellung von Beschichtungen mit verbesserter Abrasionsbeständigkeit, insbesondere von Kunststoffsubstraten, wie beispielsweise Straßenreflektoren, oder von Beschichtungen mit verbesserter Stabilität, wie der Beschichtung von Filterpapiere, beispielsweise für Ölfilter, eingesetzt. Polycarbonatsubstrate werden in der WO 2006/028518 A2 jedoch nicht beschrieben.

Wie bereits ausgeführt, müssen für die Beschichtung von Polycarbonat geeignete Beschichtungsmittel aber nicht nur zu kratzfesten Beschichtungen härtbar sein, sie müssen darüber hinaus auch zu transparenten Beschichtungen mit sehr guten optischen Eigenschaften führen. Hinweise, wie die neben der Kratzfestigkeit geforderte Transparenz der beschichteten Substrate erreicht werden könnte, sind entsprechend in der WO 2006/028518 A2 nicht enthalten.

Weiterhin sind aus der DE 10 2006 020 987 A1 Dispersionen von pyrogen hergestelltem Siliciumdioxid in organischem Lösemittel und deren Verwendung in Lacken, insbesondere Klarlacken, bekannt. Die dort beschriebenen Siliciumdioxid-Dispersionen weisen den Vorteil auf, dass die diese Dispersionen enthaltenen Klarlacke einen geringeren Grauschleier (niedrigere Haze-Werte, wobei der Haze-Wert der Anteil in % des um mehr als 2,5° von der Einstrahlachse gestreuten Lichtes ist) aufweisen als Klarlacke mit herkömmlichen Siliciumdioxid-Dispersionen. Erreicht wird dies durch einen im Vergleich zu herkömmlichen Siliciumdioxid-Dispersionen reduzierten Grobanteil an Siliciumdioxid-Teilchen. Die dort beschriebenen Dispersionen enthalten Siliciumdioxid-Teilchen, bei denen 20 bis 98 Gew.-%, bevorzugt 60 bis 95 Gew.-% der Teilchen eine Partikelgröße zwischen 10 nm und 1500 nm und 2 bis 80 Gew.-%, bevorzugt 5 bis 40 New.-%, der Teilchen eine Partikelgröße zwischen 1500 nm und 4000 nm aufweisen.

Allerdings ist der hier bestimmte Haze, der für gewöhnliche Klarlackanwendungen ausreichend ist, noch nicht ausreichend für die optische Qualität, die in transparenten Beschichtungen für Polycarbonate gefordert wird. Hier sollte weniger als 1% des Lichtes in der ursprünglichen unbelasteten Beschichtung gestreut werden, d.h. die Beschichtungen sollen direkt nach ihrer Herstellung, also vor Belastungen - wie z.B. Kratzbeanspruchungen -, einen Haze-Wert <1 aufweisen.

In der nicht vorveröffentlichten Patentanmeldung WO 2009/118415 A1 werden Beschichtungsmittel beschrieben, die Nanopartikel, Vernetzer und einen ionischen Reaktivverdünner enthalten. Als Vernetzer werden - neben einer Vielzahl anderer Verbindungen mit vernetzbaren Gruppen - Polymere mit strahlenhärtbaren Gruppen eingesetzt und die Härtung erfolgt dann entsprechend mittels UV-Strahlung.

In der WO 2008/068154 A2 ist ein Verfahren zur Modifizierung von organischen oder anorganischen Substraten beschrieben, bei dem Vorbehandlungsmittel auf der Basis von Nanopartikeln enthaltend mindestens eine polymerisierbare Gruppe, die chemisch an die Oberfläche der Nanopartikel gebunden ist, auf das Substrat aufgebracht und dann das Substrat mittels Strahlung getrocknet wird.

In der US 2007/281140 A1 sind reflektierende Zusammensetzungen, insbesondere reflektierende Tinten, beschrieben, die zur Erzielung der reflektierenden Eigenschaften als wesentlichen Bestandteil metallische Nanopartikel und Pigmente enthalten und die zur Beschichtung von fälschungssicheren Dokumenten eingesetzt werden.

Die WO 2006/079543 A1 beschreibt Beschichtungsmittel für Metallsubstrate, die ein durch Hydrolyse von Alkylsilanen hergestelltes Nanopartikelförmiges Polymerisat und Füllstoff-Nanopartikel aus Oxiden von Aluminium, Zirkon, Silicium und Eisen enthalten.

Ferner sind aus der WO 2005/056697 A2 strahlenhärtbare Beschichtungsmittel zur Herstellung transparenter korrosionshemmender Beschichtungen bekannt, die neben strahlenhärtbarem Bindemittel und ethylenisch ungesättigten, sauren (Poly)Phosphorsäureestern als wesentlichen Bestandteil Nanopartikel enthalten.

Weiterhin beschreibt die WO 03/044099 A1 Beschichtungsmittel, die neben strahlenhärtbaren Bindemitteln Nanopartikel mit einer mittleren Teilchengröße von 1 bis 20 nm und zusätzlich Nanopartikel mit einer mittleren Teilchengröße von 25 bis 200 nm enthalten.

Aus der WO 03/016411 A1 sind Beschichtungsmittel bekannt, die neben strahlenhartbaren Bindemitteln Nanopartikel mit einer Primärteilchengröße von 5 bis 50 nm enthalten, die mit einer ethylenisch ungesättigten Verbindung modifiziert worden sind.

Die WO 01/66653 A1 beschreibt Beschichtungsmittel, die als wesentlichen Bestandteil feuchtigkeitshärtende Bissilane sowie ggf. zusätzlich Nanopartikel und ggf. Polycarbonsäuren oder Copolymere auf der Basis von ungesättigten Carbonsäuren und einem oder mehreren Monomeren, ausgewählt aus der Gruppe Ethylen, Propylen, Styrol, Butadien, Acrylamid und Acrylnitril enthalten.

In der WO 02/24344 A2 ist ein Verfahren zur Beschichtung eines metallischen Bandes beschrieben, bei dem strahlenhärtbare Beschichtungsmittel eingesetzt werden, die strahlenhärtbare Bindemittel, Photoinitiator, einen Korrosionsinhibitor und ggf. Nanopartikel enthalten.

Aus der DE 100 04 499 A1 sind wässrige sbahlenhärtbare Beschichtungsmittel, insbesondere Wasserbasislacke, bekannt, die neben einem strahlenhärtbaren Bindemittel mindestens ein farb- und/oder effektgebendes Pigment sowie monodisperse Nanopartikel auf der Basis von Siliciumdioxid enthalten.

Schließlich sind in der US 2002/111390 A1 strahlungshärtbare Beschichtungsmittel für die Beschichtung von optischen Substraten, beispielsweise Linsen, aus verschiedenen Kunststoffsubstraten, wie beispielsweise Polycarbonat, beschrieben. Die Beschichtungsmittel enthalten neben monofunktionellen Acrylaten Urethanacrylate und kolloidale Metalloxide, insbesondere SiO2-Teilchen.

### Aufgabe

Der vorliegenden Erfindung lag daher die Aufgabe zugrunde, Beschichtungsmittel zur Verfügung zu stellen, die für die Beschichtung von Polycarbonatsubstraten geeignet sind und die zu gehärteten Beschichtungen mit einer hohen Transparenz, geringem Grauschleier (Haze-Werte kleiner als 1, bestimmt mit Hilfe des BYK-Gardner Gerätes Hazemeter AT-4727) und einer guten Kratz- und Abriebfestigkeit führen. Ferner sollten die Beschichtungsmittel einfach handhabbar sein und eine gute Verarbeitungsviskosität sowie einen guten Verlauf aufweisen.

### Lösung der Aufgabe

Im Lichte der obengenannten Aufgabenstellung wurde ein Verfahren zur Beschichtung von insbesondere transparenten Polycarbonatsubstraten gefunden, bei dem ein transparentes Beschichtungsmittel umfassend (A) mindestens ein strahlungshärtendes Bindemittel mit mindestens zwei ethylenisch ungesättigten terminalen Gruppen, (B) Nanopartikel und (C) ggf. Lösemittel und/oder ggf. Reaktivverdünner, auf ein Polycarbonatsubstrat appliziert wird, das dadurch gekennzeichnet ist, dass
(i) das Beschichtungsmittel Siliciumdioxid-Nanopartikel (B) enthält,
(ii) die Nanopartikel einen d₅₀-Wert zwischen 80 und 300 nm aufweisen,
(iii) die Nanopartikel (B) eine solche Partikelgrößenverteilung haben, dass
   weniger als 15 Gew.% der Teilchen eine Partikelgröße im Bereich von weniger als 80 nm,
   75 bis 95 Gew.% der Teilchen eine Partikelgröße im Bereich von 80 bis 300 nm,
   0 bis 5 Gew.% der Teilchen eine Partikelgröße im Bereich von mehr als 300 bis 1.000 nm und
   0 bis 5 Gew.% der Teilchen eine Partikelgröße im Bereich von mehr als 1.000 nm bis 10.000 nm aufweisen
(iv) und das Beschichtungsmittel mindestens ein Dispergieradditiv enthält.

Gegenstand der vorliegenden Erfindung sind außerdem die in diesem Verfahren eingesetzten Beschichtungsmittel sowie die durch das Verfahren erhältlichen beschichteten Polycarbonatsubstrate sowie deren Verwendung.

Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Verfahrens gelöst werden konnten.

So ist es insbesondere überraschend, dass die Beschichtungsmittel trotz der Verwendung von Nanopartikeln mit einer im Vergleich zum Stand der Technik größeren mittleren Partikelgröße (hier ausgedrückt durch den d₅₀-Wert zwischen 80 und 300 nm) zu transparenten Beschichtungen ohne Grauschleier, also mit einem niedrigen Haze-Wert kleiner als 1, bestimmt mit Hilfe des BYK-Gardner Gerätes Hazemeter AT-4727, gehärtet werden können. Darüber hinaus führen die Beschichtungsmittel zu Beschichtungen mit einer guten Kratzfestigkeit und Abriebbeständigkeit, das heißt, der Verbund aus Polycarbonatsubstrat und Beschichtung erfüllt die Anforderung des Taber-Tests. Vorteilhaft ist ferner, dass die erfindungsgemäß eingesetzten Beschichtungsmittel eine einfache Handhabbarkeit und eine gute Verarbeitungsviskosität sowie einen guten Verlauf aufweisen.

### Beschreibung der Erfindung

### Erfindungsgemäß eingesetztes Beschichtungsmittel

### Das strahlungshärtbare Bindemittel (A)

Prinzipiell sind alle einer strahlungsinduzierten Polymerisation zugänglichen Oligo- oder Polymere, als sogenannte Präpolymere einsetzbar. Die Bindemittelkomponenten (A) besitzen mindestens zwei ethylenisch ungesättigte terminale Gruppen. Als ethylenisch ungesättigte terminale Gruppen eignen sich beispielsweise Acrylat- oder Methacrylatgruppen. Die mindestens zwei ethylenisch ungesättigten terminalen Gruppen können hierbei gleich oder verschieden sein. Während für UVhärtende Systeme Acrylat-Gruppen bevorzugte terminale Gruppen sind, werden Methacrylate häufig über Elektronenstrahlung gehärtet.

Bevorzugt beträgt die Anzahl der ethylenisch ungesättigten terminalen Gruppen 2 bis 20, besonders bevorzugt 2 bis 14, ganz besonders bevorzugt 2 bis 9 und am besten 2 bis 8. Die ethylenisch ungesättigten terminalen Gruppen können innerhalb eines Bindemittelmoleküls gleich oder verschieden sein, d.h. es können beispielsweise Acrylat- neben Methacrylatgruppen oder anderen ethylenisch ungesättigten Gruppen vorliegen.

Sind als ethylenisch ungesättigte terminale Gruppen des Bindemittels Acrylat- und/oder Methacrylatgruppen vorhanden, so lässt sich die Struktur des Bindemittels durch die allgemeine Formel (I) 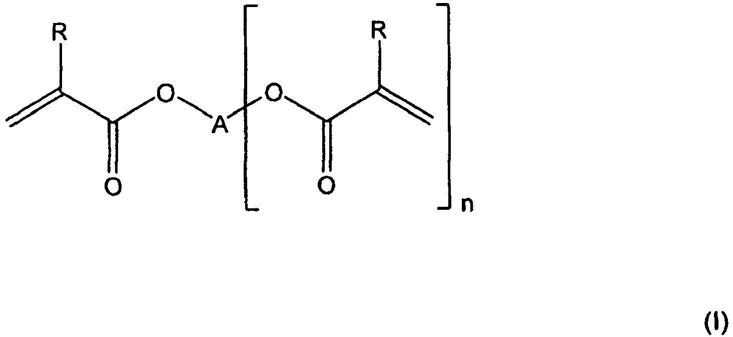 wiedergeben, worin die Reste R unabhängig voneinander für Wasserstoff oder eine Methylgruppe stehen, n für 1 bis 19 steht und A für einen (n+1)-valenten oligomeren oder polymeren Rest steht. A ist vorzugsweise gewählt aus der Gruppe der Polyurethane, Polyester, Polyether, Polymelamine, Polyallophanate, Polyisocyanurate, Polyepoxide und Polysiloxane.

Der Wert für n beträgt vorzugsweise 1 bis 19, bevorzugter 1 bis 13, besonders bevorzugt 1 bis 8 und ganz besonders bevorzugt 1 bis 7.

Die nach dem erfindungsgemäßen Verfahren hergestellten beschichteten Polycarbonatsubstrate weisen für alle Reste A eine erhöhte Kratzbeständigkeit auf. Besonders vorteilhaft hinsichtlich einer zusätzlichen Chemikalienbeständigkeit haben sich solche Bindemittel der allgemeinen Formel (I) erwiesen, bei welchen A für einen Polyurethan-Rest, Polyester-Rest, Polyallophanat-Rest oder Polyisocyanurat-Rest steht. Hinsichtlich einer zusätzlichen Bewitterungsbeständigkeit sind als Reste A insbesondere Polyurethane bevorzugt.

Harze der allgemeinen Formel (I) werden im Allgemeinen als strahlenhärtende Acrylat- beziehungsweise Methacrylatharze bezeichnet. Im Gegensatz zu klassischen Acrylat- oder Methacrylatharzen besitzen die strahlenhärtenden Harze mindestens zwei endständige Kohlenstoff-Doppelbindungen. Unter "endständig" oder "terminal" werden in der vorliegenden Schrift bei einem ausschließlich linearen divalenten Rest A die Alpha- und Omegapositionen im Molekül verstanden, während bei kammartigen und dentritischen Strukturen von A auch die Kamm-Enden beziehungsweise die Arm-Enden vom Begriff "endständig" beziehungsweise "terminal" umfasst sind.

Die Verbindungen der allgemeinen Formel (I) werden durch den Einbau endständiger Acryl- oder Methacrylsäurereste an die von den Resten A abgeleiteten Präpolymere erhalten. Enthalten die Reste A endständig Hydroxylgruppen, so können Acrylsäure beziehungsweise Methacrylsäure unter Ausbildung von Esterbindung ankondensiert werden. Trägt A endständig Aminogruppen, so entstehen anstelle der Esterbindungen Amidbindungen. Prinzipiell sind alle dem Fachmann auf diesem Gebiet geläufigen Anbindungsstrategien einsetzbar. So können endständige Isocyanatgruppen der Reste A mit Hydroxyestern der Acrylsäure oder Methacrylsäure umgesetzt werden. Auch eine Additionsreaktion zwischen der Carboxylgruppe der Acrylsäure oder Methacrylsäure und Epoxygruppen ist möglich. Hierbei entstehen wiederum Hydroxygruppen, die einer Umsetzung mit Acrylsäure oder Methacrylsäure oder deren Säurechloriden zugänglich sind.

Beispiele für die durch UV-Bestrahlung vorzugsweise radikalisch vernetzenden Bindemittel mit mindestens zwei ethylenisch ungesättigten terminale Gruppen sind multiacryl- und/oder multimethacryl-funktionalisierte Polyurethane, Polyester, Polyether, Polymelamine, Polyallophanate, Polyisocyanurate, Polyepoxide und Polysiloxane und deren oligomere Formen, sowie deren Mischformen, wie beispielsweise gemischte Polyesterurethane. "Multifunktionell" bedeutet hierbei mindestens "difunktionell".

So können beispielsweise multiacrylat-funktionalisierte Bindemittel wie ein Epoxy-Diacrylat (Craynor 132 der Firma Sartomer), ein propoxyliertes Pentaerythritol-Triacrylat (Photomer 4171 der Firma Cognis Deutschland GmbH & Co. KG), ein Melamin-Pentaacrylat (Actilane 890 der Firma Akzo Nobel Chemical GmbH), ein aliphatisches Urethan-Hexaacrylat-Oligomer (Ebecryl 1290 der Firma UCB GmbH), ein aliphatisches Urethan-Tetraacrylat-Oligomer (Sartomer CN 925 der Firma Craynar) oder ein Esteracrylat (DPHA der Firma UCB GmbH) eingesetzt werden.

Durch die Wahl des Polymer- oder Oligomer-Rückgrats A des Bindemittels, also die Wahl von beispielsweise Polyurethan, Polyester, Polyether, Polymelamin, Polyallophanat, Polyisocyanurat, Polyepoxid oder Polysiloxane kann Einfluss auf die Eigenschaften der gehärteten Beschichtung, insbesondere hinsichtlich ihrer Chemikalienbeständigkeit, Lichtbeständigkeit, Zähigkeit, Haftung und Abriebfestigkeit genommen werden. Als vorteilhaft in ihrer Kombination der vorgenannten Eigenschaften erweisen sich vor allem Polyurethane, Polyester und Polyether, worunter ganz besonders Polyurethane und Polyester bevorzugt sind.

Hinsichtlich ihrer Architektur kommen neben den linearen Verbindungen der allgemeinen Formel (I) auch solche mit kammartigen oder vorzugsweise dentritischen Strukturen in Frage. Unter den Verbindungen der Formel (I) sind insbesondere solche mit dentritischen Strukturen und endständigen Acrylsäure- beziehungsweise Methacrylsäuregruppen bevorzugt. Hierunter sind wiederum solche bevorzugt deren Oligomer-Rückgrat ein dentritischer Polyester ist. Solche Verbindungen zeichnen sich selbst bei hohen Molmassen durch relativ niedrige Viskositäten aus, ermöglichen hohe Vernetzungsdichten und eine Verbesserung der Kratzfestigkeit und Chemikalienbeständigkeit. Sie zeichnen sich darüber hinaus durch ein sehr geringes Schrumpfen bei schneller Härtung aus.

Beim Einsatz acrylat- und/oder methacrylat-modifizierter dentritischer Polyester kann auf den Einsatz von Photoinitiatoren (PI) insbesondere dann gänzlich verzichtet werden, wenn beispielsweise aminische Synergisten, das heißt Amine mit einer Methylengruppe in Nachbarschaft des Stickstoffs in der Zusammensetzung vorhanden sind. Den aminischen Synergisten kommt die Aufgabe zu unter Radikalbildung die Sauerstoffinhibierung zu reduzieren. Auf den Einsatz von Synergisten kann folglich dann verzichtet werden, wenn unter Sauerstoffausschluss beispielsweise unter einer Inertgasatmosphäre wie einer Stickstoffatmosphäre gehärtet wird.

### Die Nanopartikel (B)

Es ist efindungswesentlich, dass die Beschichtungsmittel Siliciumdioxid-Nanopartikel (B) mit einem d₅₀-Wert von 80 nm bis 300 nm, bevorzugt von 90 nm bis 250 nm, und besonders bevorzugt von 100 nm bis 200 nm, enthalten. Der d₅₀-Wert ist dabei definiert als die Partikelgröße in der Partikelgrößenverteilung, bei der 50 Gew.-% der Teilchen eine geringere Partikelgröße haben.

Darüber hinaus ist es erfindungswesentlich, dass die Nanopartikel (B) eine solche Partikelgrößenverteilung haben, dass
weniger als 15 Gew.% der Teilchen eine Partikelgröße im Bereich von weniger als 80 nm,
75 bis 95 % der Teilchen eine Partikelgröße im Bereich von 80 bis 300 nm,
0 bis 5 % der Teilchen eine Partikelgröße im Bereich von mehr als 300 bis 1.000 nm und
0 bis 5 % der Teilchen eine Partikelgröße im Bereich von mehr als 1.000 nm bis 10.000 nm aufweisen.

Insbesondere werden Nanopartikel eingesetzt, die eine eine solche Partikelgrößenverteilung haben, dass
weniger als 10 Gew.% der Teilchen eine Partikelgröße im Bereich von weniger als 80 nm,
80 bis 90 % der Teilchen eine Partikelgröße im Bereich von 80 bis 300 nm,
0 bis 5 % der Teilchen eine Partikelgröße im Bereich von mehr als 300 bis 1.000 nm und
0 bis 5 % der Teilchen eine Partikelgröße im Bereich von mehr als 1.000 nm bis 10.000 nm aufweisen.

Die Bestimmung der Partikelgrößenverteilung erfolgt vorzugsweise nach dem Prinzip der Laserbeugung auf einem Laserdiffraktometer (Horiba LA 920). Hierzu wird zunächst eine Probe der Kieselsäuredispersion unter Rühren entnommen, in ein Becherglas überführt und durch Zugabe von Lösemittel ohne Zusatz von Dispergieradditiven so verdünnt, dass eine Dispersion mit einem Gewichtsanteil von ca. 1 Gew.-% SiO2 entsteht. Unmittelbar im Anschluss an die Dispergierung wird von einer Teilprobe der Dispersion mit dem Laserdiffraktometer (Horiba LA-920) die Partikelgrößenverteilung bestimmt. Für die Messung ist ein relativer Brechungsindex des Lösemittels zu wählen. Alle Messungen erfolgen bei Raumtemperatur. Die Partikelgrößenverteilung sowie die relevanten Größen wie z. B. der d₅₀-Wert, die Partikelgrößenverteilung q3(x) (entspricht der differenzierten Verteilungssumme, also der ersten Ableitung der Verteilungssumme) oder die Verteilungssumme Q3 (x) werden vom Gerät automatisch berechnet und grafisch dargestellt. Es sind die Hinweise in der Bedienungsanleitung zu beachten.

Nur durch die Verwendung dieser Siliciumdioxid-Teilchen mit der ganz speziellen Partikelgrößenverteilung ist überraschenderweise gewährleistet, dass die resultierenden Beschichtungen eine hohe Transparenz aufweisen, obwohl die Nanopartikel eine mittlere Partikelgröße aufweisen, die deutlich größer ist als die Partikelgröße der Nanopartikel, die in bekannten Beschichtungsmitteln für die Beschichtung von Polycarbonatsubstraten oder anderen transparenten Substraten eingesetzt werden. Generell ist nämlich die Partikelgröße klein im Vergleich zur Wellenlänge des sichtbaren Lichts zu wählen, um eine Transparenz der resultierenden Beschichtung zu gewährleisten. Daher weisen die in den Beschichtungsmitteln der US-A-6,420,451 eingesetzten Nanopartikel kleine Partikelgrößen zwischen 2 und 60 nm, bevorzugt zwischen 5 und 50 nm, auf.

Als Nanopartikel (B) werden Nanopartikel auf Basis von Siliciumdioxid eingesetzt. Insbesondere werden sogenannte pyrogene Kieselsäuren, die durch Flammenhydrolyse von Siliciumhalogenverbindungen erhalten werden, eingesetzt. Deratige Teilchen sind im Handel beispielsweise unter der Bezeichnung Aerosil® der Firma Evonik Degussa erhältlich.

Es können auch Nanopartikel, deren Oberfläche mit monomeren oder oligomeren Verbindungen modifiziert ist, in den Beschichtungsmitteln eingesetzt werden. Eine Oberflächenmodifizierung erfolgt üblicherweise durch Anbindung der an der Nanopartikeloberfläche befindlichen Gruppen, wie beispielsweise Hydroxygruppen, an monomere oder oligomere Verbindungen. Diese monomeren oder oligomeren Verbindungen enthalten daher zumindest eine gegenüber den an der Nanopartikeloberfläche befindlichen Gruppen affine Gruppe. Die Anbindung kann beispielsweise durch kovalente Bindung, ionische Anbindung oder Physisorption erfolgen. Der nicht zur Anbindung an die Nanopartikeloberfläche benötigte Teil der monomeren oder oligomeren Verbindungen ragt vorzugsweise ganz oder teilweise in das die Nanopartikel umgebende Medium.

Die zur Oberflächenmodifizierung verwendeten monomeren oder oligomeren Verbindungen können neben der zur Anbindung an die Oberfläche der Nanopartikel erforderlichen Gruppe noch weitere funktionelle Gruppen enthalten, die beispielsweise in der Lage sind, mit der Bindemittelkomponente (A) zu reagieren. Eine derartige Oberflächenmodifikation gelingt beispielsweise durch Zugabe hydrolysierbarer Silane, die noch mindestens eine weitere funktionelle Gruppe tragen, zu den Nanopartikel.

Beispiele zur Oberflächenmodifizierung der Nanopartikel geeigneter hydrolysierbarer Silane umfassen solche Silane, die als gegenüber dem Bindemittel (A) reaktive Gruppe eine Vinylgruppe, eine Acrylatgruppe, eine Methacrylatgruppe, eine Glycidylgruppe, eine Aminogruppe, eine Hydroxygruppe oder eine Mercaptogruppe enthalten.

Bevorzugt werden erfindungsgemäß oberflächenmodifzierte Nanopartikel (B) auf Basis von silanisierten, pyrogen hergestellten Kieselsäuren eingesetzt, insbesondere auf Basis von pyrogen hergestellten Kieselsäuren, die auf der Oberfläche fixierte Dimethylsilylgruppen und/der Monomethylsilylgruppen aufweisen. Diese besonders bevorzugt eingesetzten Nanopartikel (B) sind beispielsweise in der DE-A-10200602098 beschrieben und können beispielsweise dadurch hergestellt werden, dass man ein pyrogen hergestelltes Siliciumdioxid, insbesondere pyrogen hergestelltes Siliciumdioxid mit einer BET-Oberfläche von 200 ± 25 m²/g, mit Dimethyldichlor silan und/oder Monomethyltrichlorsilan oberflächenmodifiziert .

Bevorzugt wird das oberflächenmodifizierte Siliciumdioxid anschließend strukturmodifiziert. Diese Strukturmodifizierung erfogt bekanntermaßen durch mechanische Einwirkung. Die Strukturmodifizierung kann zum Beispiel mit einer Kugelmühle oder einer kontinuierlich arbeitenden Kugelmühle erfolgen. Ggf. kann sich daran noch eine Nachvermahlung, z.B. mittels einer Luftstrahlmühle oder Stiftmühle, und/oder eine Temperung, z.B. in einem Trockenschrank oder kontinuierlich in einem Fließ- oder Wirbelbett, anschließen. Die Herstellung von silanisierten, strukturmodifizierten pyrogen hergestellten Kieselsäuren ist beispielsweise auch in der WO04/020532 beschrieben.

Diese besonders bevorzugt eingesetztenNanopartikel sind im Handel unter der Bezeichnung Aerosil® R9200 der Firma Evonik Degussa erhältlich.

Die Nanopartikel (B) werden in dem Beschichtungsmittel vorzugsweise in zumindest einem Teil des Bindemittels (A) oder - falls mehrere verschiedene Bindemittel (A) in dem erfindungsgemäßen Beschichtungsmittel eingesetzt werden - in zumindest einem Teil mindestens eines Bindemittels (A) dispergiert eingesetzt.

Die Dispergierung der Nanopartikel in dem Bindemittel bzw. den Bindemitteln erfolgt unter Zusatz mindestens eines geeigneten, handelsüblichen Dispergieradditivs.

Bevorzugt werden dabei Dispergieradditive (D1) auf Basis von Phosphorsäureestern, die auf Polystyroloxid-block (b)-Polyalkylenoxid-Copolymeren basieren, eingesetzt. Besonders bevorzugt werden Dispergieradditive (D1) auf der Basis von Phosphorsäureestern, die auf Polystyroloxid-block (b)-Polyalkylenoxid-Copolymeren basieren, der allgemeinen Strukturformel (II)

[RO(SO)ₐ(EO)_{b}(CH₂CHCH₃O)_{c}(BO)_{d}]ₓP(O)(OH)₃₋ₓ (II)

eingesetzt, wobei
- R =: geradkettiger oder verzweigter oder cycloaliphatischer Rest mit 1 bis 22 Kohlenstoffatomen, bevorzugt R = Isononylrest oder Butylrest
- SO =: Styroloxid,
- EO =: Ethylenoxid,
- BO =: Butylenoxid und
a = 1 bis < 2,
b = 3 bis 100,
c = 0 bis 10,
d = 0 bis 3,
x = 1 oder 2 und
b >= a+c+d ist.

Solche bevorzugten Dispergieradditive (D1) sind beispielsweise in der EP-B-1 167 452 beschrieben. Sie sind im Handel beispielsweise unter der Bezeichnung Tego® Dispers 655 der Firma Evonik Degussa erhältlich.

Besonders bevorzugt wird erfindungsgemäß eine Mischung aus zwei oder mehreren Dispergieradditiven, insbesondere eine Mischung aus mindestens einem Dispergieradditiv (D1) auf Basis von Phosphorsäureestern, die auf Polystyroloxid-block (b)-Polyalkylenoxid-Copolymeren basieren, und mindestens einem Dispergieradditiv (D2) eingesetzt. Ganz besonders bevorzugt kommt hierbei eine Mischung aus mindestens einem Dispergieradditiv (D1) der Strukturformel (II) mit mindestens einem von (D1) verschiedenen Dispergieradditiv (D2) auf Basis von Umsetzungsprodukten aus aminofunktionellen Polymeren, Polyestern und Polyethern zum Einsatz.

Die Verwendung dieser Mischung aus mindestens einem Dispergieradditiv (D1) und mindestens einem Dispergieradditiv (D2) in den Nanopartikel-Dispersionen hat eine im Vergleich zu herkömmlichen Kieselsäuren wesentlich niedrigere rheologische Wirksamkeit der erfindungsgemäß eingesetzten Siliciumdioxid-Dispersionen zur Folge und ermöglicht so den Einsatz der Siliciumdioxid-Nanopartikel auch in höheren Konzentrationen ohne Beeinträchtigung des Appearance der Lackoberfläche und gewährleistet außerdem eine gute Verarbeitungsviskosität der resultierenden Beschichtungsmittel.

Insbesondere werden Dispergieradditiv (D2) eingesetzt, die durch teilweise oder vollständige Umsetzung von
D2A) einem oder mehreren aminofunktionellen Polymeren mit
D2B) einem oder mehreren polyestern der allgemeinen Formel (III)/(IIIa)

T-C-(O)-[O-A-C(O)]ₓ-OH (III)

T-O-[C(O)-A-O-]_{y}-Z (IIIa)

und
D2C) einem oder mehreren Polyethern der allgemeinen Formel (IV)/(Iva)

T-C-(O).B-Z (IV)

T-O-B-Z (IVa)

erhalten werden, wobei
T ein Wasserstoffrest und/oder ein gegebenenfalls substituierter, linearer oder verzweigter Aryl, Arylalkyl, Alkyl- oder Alkenylrest mit 1 bis 24 Kohlenstoffatomen ist,
A mindestens ein zweiwertiger Rest ist, ausgesucht aus der Gruppe der linearen, verzweigten, cyclischen und aromatischen Kohlenwasserstoffe,
Z mindestens ein Rest ist, ausgesucht aus der Gruppe der Sulfonsäuren, Schwefelsäuren, Phosphonsäuren, Phosphorsäure, Carbonsäuren,lsocyanate, Epoxide, insbesondere der Phosphorsäure und (Meth)-Acrylsäure,
B ein Rest der allgemeinen Formel (V)ist

-(ClH2IO)a -(CmH2mO)b -(CnH2nO)c-(SO)d- (V)

a,b,c unabhängig voneinander Werte von 0 bis 100 sind,
mit der Maßgabe, dass die Summe aus a+b+c ≥ 0, vorzugsweise 5-35, insbesondere 10-20 ist und mit der Maßgabe, dass die Summe aus a+b+c+d > 0,
d ≥ 0, vorzugsweise 1 bis 5 ist,
l,m,n unabhängig voneinander ≥ 2, vorzugsweise 2 - 4 ist,
x,y unabhängig voneinander ≥ 2 sind.

Diese Dispergieradditive (D2) sind beispielsweise in der EP-A-1 685 895 beschrieben.

Die erfindungsgemäß bevorzugt eingesetzte Dispersion der Nanopartikel (B) wird besonders bevorzugt dadurch hergestellt, dass man die obenbeschriebenen Nanopartikel, bevorzugt strukturmodifizierte Siliciumdioxid-Nanopartikel, insbesondere oberflächenmodifizierte, strukturmodifizierte Siliciumdioxid-Nanopartikel, die Dimethylsilylgruppen und/oder Monomethylsilylgruppen an der Oberfläche aufweisen , mit zumindest einem Teil des Bindmittels (A) oder - falls mehrere verschiedene Bindemittel (A) in dem erfindungsgemäßen Beschichtungsmittel eingesetzt werden - in zumindest einem Teil mindestens eines Bindemittels (A) vermischt und vordispergiert. Besonders bevorzugt enthält diese Vordispersion zusätzlich mindestens ein Dispergieradditiv (D2), insbesondere ein Dispergieradditiv (D2) auf Basis von Umsetzungsprodukten aus aminofunktionellen Polymeren, Polyestern und Polyethern. Diese Dispergierung kann beispielsweise mit Hilfe einer Perlmühle erfolgen.

Danach wird der so erhaltenen Vordispersion bevorzugt mindestens ein Dispergieradditiv (D1) zugesetzt und unter hohem Energieeintrag, beispielsweise unter Verwendung einer Kugelmühle, wie z.B. der Netzsch LabStar LS1 der Firma Netzsch-Feinmakltechnik GmbH, mit ZrO2 Mahlkörpern mit einem Durchmesser von d=0,65 mm, werden die Nanopartikel auf die gewünschte erfindungsgemäße Partikelgröße mit dem d₅₀-Wert von 80 bis 300 nm vermahlen.

Selbstverständlich können aber auch andere Nanopartikel mit den erfindungsgemäßen Partikelgrößen, die nach anderen üblichen Verfahren unter Verwendung geeigneter Dispergieradditive - auch anderer als die obenbeschriebenen Dispergieradditive D1 bzw. D2 -, erhalten wurden, eingesetzt werden.

### Das ggf. verwendete Lösemittel (C) und/oder ggf. verwendete Reaktivverdünner

Die im erfindungsgemäßen Verfahren eingesetzten Beschichtungsmittel können ggf. noch Lösemittel (C) enthalten. Die erfindungsgemäß eingesetzten Beschichtungsmittel können zusätzlich zu dem Lösemittel (C) oder anstelle des Lösemittels (C) ggf. noch Reaktiwerdünner enthalten. Der Einsatz von Reaktivverdünnern ist hierbei unter dem Aspekt der Emissionsvermeidung bevorzugt, da die Reaktiwerdünner mit Komponente (A) copolymerisieren. Die Reaktiwerdünner beziehungsweise Lösemittel sind jedoch so zu wählen, dass sie sich in der eingesetzten Mischung der Lösemittel und/oder Reaktiwerdünner oder wenn diese unvermischt eingesetzt werden, sie selbst sich gegenüber dem Polycarbonatsubstrat weitestgehend optisch inert verhalten und dieses vorzugsweise hinsichtlich seiner Transparenz nicht beeinträchtigen. In diesem Sinne bedeutet "inert", dass für das Auge keine erkennbare Trübung vorhanden ist. Der Begriff "inert" schließt jedoch nicht aus, dass die Lösemittel und/oder Reaktiwerdünner das Polycarbonatsubstrat gezielt anquellen dürfen, was zu einer Verbesserung der Haftung beitragen kann. Eine weitere Aufgabe der Lösemittel und/oder Reaktiwerdünner besteht neben der Viskositätsherabsetzung der Beschichtungsmittel darin einen möglichst gleichmäßigen Verlauf der Beschichtungsmittelzusammensetzung auf dem Substrat zu erlauben.

Als Lösemittel sind insbesondere Ethanol, Isopropanol, n-Butanol, Ethylacetat, Butylacetat, Solventnaphta, Methylethylketon, 1-Methoxypropylacetat-2, Aceton oder Tetrahydrofuran geeignet, wobei insbesondere Kombinationen verschiedener Lösemittel bevorzugt sind. Besonders bevorzugt werden Kombinationen der Lösemittel Ethanol, Isopropanol, n-Butanol, Ethylacetat, Butylacetat, Methylethylketon und 1-Methoxypropylacetat-2 eingesetzt.

Als Reaktiwerdünner können beispielsweise niedermolekulare Acrylsäureester oder Methacrylsäureester eingesetzt werden. Hierunter zählen zum Beispiel die Acrylsäureester und Methacrylsäureester des Trimethylolpropans, Pentaerythrits und Dipentaerythrits, alkoxyliertes Glycerintriacrylat oder alkoxyliertes Glycerintrimethacrylat, wie beispielsweise propoxyliertes Glycerintriacrylat oder propoxyliertes Glycerintrimethacrylat, Tris-(2-hydroxyethyl)iso-cyanotriacrylat, Tris-(2-hydroxyethyl)iso-cyanotrimethacrylat, acrylsäuremodifizierte Kohlensäureester und Oxazolidone, Isobornylacrylat, Tetrahydrofurylacrylate, 1,6 Hexandioldiacrylat, Laurylacrylat, Isodecylacrylat und Octyldecylacrylat.

### Weitere Bestandteile der erfindungsgemäß eingesetzten Beschichtungsmittels

Die im erfindungsgemäßen Verfahren eingesetzten Beschichtungsmittel können vorteilhafterweise Photoinitiatoren (PI) enthalten. Wie oben bereits dargestellt, ist die Zugabe der Photoinitiatoren hinsichtlich ihrer Art und Menge vom eingesetzten Bindemittel (A) abhängig und kann im Falle der Verwendung dendritischer Polyesteracrylate sogar unterbleiben. In letzterem Fall ist es dann jedoch vorteilhaft, wenn das Beschichtungsmittel aminische Synergisten enthält.

Als Photoinitiatoren sind insbesondere solche aus der Gruppe bestehend aus alpha-Hydroxyketonen, alpha-Aminoketonen, Phenylglyoxylaten, Benzyldimethylketalen, Monoacylphosphinen, Bisacylphosphinen, Phosphinoxiden, Metallocenen und lodoniumsalzen geeignet. Bevorzugte Beispiele sind unter anderem 1-Hydroxy-cyclohexylphenylketon (Irgacure® 184), 2-Hydroxy-2-methyl-1-phenyl-1-propanon (Iragcure® 1173) 2-Hydroxy-1-{4-[4-(2-hydroxy-2-methyl-propionyl)-benzyl]-phenyl}-2-methyl-propan-1-on (Irgacure® 127), 2-Hydroxy-1-[4-(2-hydroxyethoxy) phenyl]-2-methyl-1-propanon (Irgacure 2959), Methylbenzoylformal (Darocure® MBF) Phosphinoxid, Phenylbis(2,4,6-trimethylbenzoyl) (Iragcure® 819) und Diphenyl (2,4,6-trimethylbenzoylphosphinoxid (Lucirin® TPO).

Neben den oben genannten Bestandteilen (A), (B), ggf. (C), ggf. (D1), ggf. (D2), ggf. (PI) und ggf. dem Reaktiwerdünner können die im erfindungsgemäßen Verfahren eingesetzten Beschichtungsmittel noch weitere klarlacktypische Additive wie beispielsweise Verlaufmittel, Lichtschutzmittel wie UV-Absorber und Radikalfänger, Haftvermittler, Entlüfter und Netzmittel enthalten.

Die Komponenten (A), (B), ggf. (C), ggf. (D1), ggf. (D2), ggf. (PI), ggf. Reaktiwerdünner sowie die klarlacktypischen Additive können dem im erfindungsgemäßen Verfahren eingesetzten Beschichtungsmittel in gelöster oder dispergierter Form zugegeben werden. Die hierfür verwendeten Lösemittel und/oder Reaktiwerdünner dieser Komponenten sind, was das komplette Beschichtungsmittel angeht, dem Bestandteil (C) zuzuordnen. Das heißt, Bestandteil (C) umfasst auch die Lösemittel und/oder Reaktivverdünner, die über die anderen Komponenten ins Beschichtungsmittel gelangen. Um einen besonders guten Verlauf der Beschichtung zu gewährleisten und somit besonders glatte Oberflächen zu erhalten, können dem erfindungsgemäß einsetzbaren Beschichtungsmittel handelsübliche Verlaufmittel wie beispielsweise Byk® 333, BYK® 310, BYK® UV3570 zugegeben werden. Durch derartige Zusätze wird die Oberflächenspannung des UV-Lackes gesenkt, so dass eine gute Benetzung des Substrates unter entsprechenden Applikationsbedingungen gewährleistet ist.

Damit das Substrat nicht dauerhaft schädigender UV-Strahlung ausgesetzt wird, können dem erfindungsgemäß eingesetzten Beschichtungsmittel UV-Absorber zugegeben werden. Beispiele dieser Klassen sind 2-(2-Hydroxyphenyl)-benztriazole, 2-Hydroxybenzophenon, Hydroxyphenyls-triazine, Oxalanilide, Hydroxyphenylpyrimidine, Salicylsäurederivate sowie Cyanoacrylate nach Lichtschutzmittel für Lacke, Curt R. Vincentz Verlag, Hannover, 1996, Seite 21.

Weiterhin können Radikalfänger wie sterisch gehinderte Amine (Hindered Amine Light Stabilizer - HALS) oder Antioxidantien zum Einsatz kommen, die ebenfalls eine dauerhafte Schädigung der erfindungsgemäßen Beschichtung unterbinden. Bekannteste Vertreter der Antioxidantien sind die sterisch gehinderten Phenole. Bei den sterisch gehinderten Aminen (HALS) kommen hingegen fast ausschließlich Derivate des 2,2,6,6,-Teramethylpiperidins zum Einsatz.

Bei Bedarf können Haftvermittler eingesetzt werden, die die dauerhafte Zwischenhaftung zum Untergrund (z.B. Polycarbonat) und/oder Primer gewährleisten. Beispiele dieser Additivklasse sind chlorierte Polyolefine, saure Polyester oder Phosphorsäureaddukte.Gegebenfalls ist auch der Einsatz von Entlüftern notwendig, um Kocher auf der Lackoberfläche zu vermeiden. Hierfür eignen sich handelsübliche Entlüfter wie beispielsweise Byk-A 500, Byk-A 50, Byk-A 515, BYK 390, BYK 306, BYK 315 und BYK 356.

Vorzugsweise enthalten die erfindungsgemäß eingesetzten Beschichtungsmittel, bezogen auf das Gewicht des Bestandteils (A) plus dem Gewicht der Nanopartikel (B) plus dem Gewicht des ggf. eingesetzten Reaktivverdünners (C):
(A) 30 bis 90, besonders bevorzugt 40 bis 85 und ganz besonders bevorzugt 50 bis 80 Gew.-%, mindestens eines strahlungshärtenden Bindemittels (A),
(B) 10 bis 40, besonders bevorzugt 15 bis 30 und ganz besonders bevorzugt 15 bis 25 Gew.-% an Nanopartikeln (B) und
(C) 0 bis 40, besonders bevorzugt 5 bis 30 mindestens eines gegenüber Polycarbonat inerten Reaktiwerdünners.

Dies bedeutet, dass sich das Gewicht des Bestandteils (A), der Nanopartikel (B) und das Gewicht des Reaktiwerdünners aus Bestandteil (C) zu 100% addieren. Auf das Gesamtgewicht aus Bestandteil (A) plus (B) plus ggf. Reaktiwerdünner bezogen werden 10 bis 40, bevorzugt 15 bis 30 und besonders bevorzugt 15 bis 25 Gew.-% der Siliciumdioxid-Nanopartikel (B) eingesetzt.

Wenn Lösemittel vorhanden sind, können diese in einer Menge von bis zu 70 Gew.-% bezogen auf das gesamte Beschichtungsmittel, enthalten sein.

Bevorzugt enthalten die erfindungsgemäß eingesetzten Beschichtungsmittel außerdem 0 bis 40 Gew.%, bevorzugt 10 bis 30 Gew.-%, bezogen auf das Gewicht der Nanopartikel (B), mindestens eines Dispergieradditivs. Besonders bevorzugt enthalten die erfindungsgemäß eingesetzten Beschichtungsmittel 2,5 bis 15 Gew.% mindestens eines Dispergieradditivs (D1) und 5 bis 25 Gew.-% mindestens eines Dispergieradditivs (D2), wobei die Mengenangaben jeweils bezogen sind auf das Gewicht der Nanopartikel (B).

Schließlich enthält das Beschichtungsmittel vorzugsweise
0 bis 10, besonders bevorzugt 1 bis 8 und ganz besonders bevorzugt 2 bis 7 Gew.-% eines oder mehrerer Photoinitiatoren (PI), wobei die Mengenangaben bezogen sind auf das Gesamtgewicht des Bindemittels (A) plus dem Gewicht des ggf. eingesetzten Reaktivverdünners (C), und
0,1 bis 15, besonders bevorzugt 0,5 bis 10 und ganz besonders bevorzugt 0,8 bis 7 Gew.-% weiterer klarlacktypischer Additive, wobei die Mengenangaben bezogen sind auf das Gesamtgewicht des Beschichtungsmittels.

### Polycarbonatsubstrat

Als Polycarbonat oder Polycarbonatsubstrat werden in der vorliegenden Erfindung sowohl Homopolycarbonate als auch Copolycarbonate verstanden. Die Polycarbonate können in bekannter Weise linear oder verzweigt sein. Auch kann ein Teil der Carbonatgruppen der Homo- oder Copolycarbonate durch Dicarbonsäureestergruppen oder andere polycarbonatverträgliche Gruppen ersetzt sein. Bevorzugt unter den Dicarbonsäureestergruppen sind aromatische Dicarbonsäureestergruppen. Enthalten die Polycarbonate neben Kohlensäureresten Dicarbonsäurereste, so spricht man auch von Polyestercarbonaten, die wie oben dargelegt ebenfalls unter den Begriff der Polycarbonate fallen. Sind Dicarbonsäureestergruppen enthalten, so können diese in einem Anteil von bis zu 80 Mol-%, vorzugsweise 20 bis 50 Mol-% vorliegen.

Polycarbonate können nach allen aus der Literatur bekannten Verfahren hergestellt werden. Geeignete Verfahren zur Herstellung von Polycarbonaten sind beispielsweise die Herstellung aus Bisphenolen mit Phosgen nach dem Phasengrenzflächenverfahren oder dem Verfahren aus homogener Phase (Pyridin-Verfahren) oder aus Bisphenolen mit Kohlensäureestern nach dem Schmelzeumesterungsverfahren. Diese Herstellverfahren sind beispielsweise beschrieben in H. Schnell, "Chemistry and Physics of Polycarbonates", Polymer Reviews, Band 9, S. 31 bis 76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P. R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299. Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in den DE 10 31 512 A, US 3 022 272, US 5 340 905 und US 5 399 659. Die nach den oben beschriebenen Verfahren hergestellten Polycarbonate besitzen ein gewichtsmittleres Molekulargewicht Mw von vorzugsweise 12000 bis 400000 g/mol, besonders bevorzugt von 18000 bis 80000 g/mol und ganz besonders bevorzugt von 22000 bis 60000 g/mol.

Die Polycarbonate beziehungsweise Polycarbonatsubstrate können in beliebiger räumlicher Form, wie zum Beispiel als Platten, Fenster, Lärmschutzwänden, Brillengläser, optische Linsen oder Teile von Kraftfahrzeugen, wie Motorräder, Busse, LKW oder PKW, Nutzfahrzeugen und/oder Flugzeugteile, wie beispielsweise Scheiben, insbesondere Heck- und unbewegliche Seitenscheiben, sowie Scheinwerfergläser bzw. Streuscheiben von Fahrzeugen, insbesondere Automobilen, und Flugzeugen, und dergleichen vorliegen. Besonders bevorzugt sind transparente Polycarbonate beziehungsweise Polycarbonatsubstrate, bevorzugt mit einer Transmission >80% des sichtbaren Lichts. Ebenfalls als Polycarbonatsubstrat geeignet sind beispielsweise Compact Discs (CD) oder Digital Video Discs bzw. Digital Versatile Discs (DVD).

### Applikation und Härtung des Beschichtungsmittels sowie beschichtete Polycarbonatsubstrate

Der Auftrag auf das Substrat erfolgt durch Standard-Beschichtungsverfahren wie z.B. Tauchen, Fluten, Spritzen, Streichen, Rakeln, Walzen, Sprühen, Fallfilmauftrag, Spincoating oder Schleudern. Besonders vorteilhaft ist das Aufbringen der Beschichtungsmittel in einem Tauch- oder Flutprozess sowie per Spritzapplikation mit niedriger Schichtdicke und gutem Verlauf.

Das Polycarbonatsubstrat kann hierzu vor der Applikation des Beschichtungsmittels mit einem Primer vorbehandelt werden. Als Primer eignen sich beispielsweise Zusammensetzungen wie sie im erfindungsgemäßen Verfahren verwendet werden, die jedoch keine Nanopartikel (B) enthalten. Vorzugsweise erfolgt das erfindungsgemäße Verfahren ohne Primerbehandlung des Substrats. Besonders bevorzugt erfolgt das erfindungsgemäße Verfahren im Einschichtverfahren, das heißt durch Aufbringen von nur einer Schicht des Beschichtungsmittels direkt auf das nicht chemisch vorbehandelte Polycarbonatsubstrat.

Nach dem Aufbringen, gegebenenfalls Abtropfen und anschließendem Ablüften der Beschichtung in der dem Fachmann bekannten Weise, erfolgt die Härtung der Beschichtung. Die Härtung kann durch Einwirkung energiereicher Strahlung, beispielsweise UV-Strahlung oder Elektronenstrahlung erfolgen. Als Strahlenquellen werden bevorzugt Quecksilber-Niederdruckstrahler, Mitteldruckstrahler, Hockdruckstrahler sowie Leuchtstoffröhren, Impulsstrahler oder Eximerstrahler verwendet, die vorzugsweise Licht in einem Wellenlängenbereich = 200 bis 700 nm, besonders bevorzugt von λ = 200 bis 500 nm und ganz besonders bevorzugt λ = 200 bis 400 nm emittieren. Weiterhin sind Strahlersysteme zu bevorzugen, die durch Modifikation des Reflektors eine geringe Wärmebelastung des Substrats erzielen. Solche Strahlersysteme sind als URS-Reflektorsysteme der Fa. IST Metz GmbH bekannt. Die üblicherweise für die UV-Härtung ausreichende Strahlendosis liegt zwischen 100 bis 6000 mJ/cm², besonders bevorzugt 300 bis 4000 mJ/cm² und ganz besonders bevorzugt bei 300 bis 3000 mJ/cm². Abhängig vom Abstand zwischen Substrat und UV-Lampe, Strahlerleistung und Reflektorsystem finden UV-Bestrahlungsstärken zwischen 100 bis 3000 mW/cm², ganz besonders bevorzugt aber 100 bis 1500 mW/cm² Anwendung.

Die Bestrahlung kann unter einer sauerstoffabgereicherten Atmosphäre durchgeführt werden. "Sauerstoffabgereichert" bedeutet, dass der Gehalt der Atmosphäre an Sauerstoff geringer ist als der Sauerstoffgehalt von Luft (20,95 Gew.-%). Die Atmosphäre kann im Grunde auch sauerstofffrei sein, d.h. es handelt sich um ein Inertgas. Als Inertgase eignen sich Kohlendioxid, Stickstoff, Edelgase oder Verbrennungsgase. Bevorzugter Bereich einer UV-Härtung in sauerstoffabgereicherter Atmosphäre ist zwischen 0,1 bis 5 Gew.-% Restsauerstoff. Ebenso kann die Bestrahlung der Beschichtungsmasse unter transparenten Medien wie Kunststofffolien, Glas oder Flüssigkeiten erfolgen. Die Bestrahlung unter einer sauerstoffabgereicherten Atmosphäre wirkt sich insbesondere auf die spätere Chemikalienbeständigkeit der gehärteten Beschichtung günstig aus.

Nach der Härtung sind Beschichtung und Substrat transparent. Die auf dem Polycarbonatsubstrat erhaltene Beschichtung weist nach der Härtung und vor Belastung einen Haze-Wert kleiner als 1 auf, bestimmt mit Hilfe des BYK-Gardner Gerätes Hazemeter AT-4727.

Nach einer Kratzbelastung, gemessen mit dem Taber-Test in Anlehnung an ASTM 1044-05 und ASTM 1003-00, weist die belastete Beschichtung einen Haze-Wert von ≤15 %, vorzugsweise ≤10%, besonders bevorzugt ≤8% auf, jeweils bestimmt mit Hilfe des BYK-Gardner Gerätes Hazemeter AT-4727.

Die Funktionalität des Bindemittels (A) sollte vorzugsweise 2 bis 20, besser 3 bis 10 oder 3 bis 9 betragen.

Weiterer Gegenstand der Erfindung sind beschichtete Polycarbonatsubstrate erhältlich durch das erfindungsgemäße Verfahren. Hierbei kann es sich beispielsweise um Platten, Fenster, Brillengläser, optische Linsen oder Fahrzeug- und Flugzeugteile, Abdeckungen, Compact Discs, Digital Versatile Discs oder Digital Video Discs handeln. Darüber hinaus Gegenstand der Erfindung ist auch das in dem Verfahren eingesetzte Beschichtungsmittel sowie die Verwendung des Beschichtungsmittels zur Beschichtung von insbesondere transparenten Polycarbonatsubstraten.

Im Folgenden wird die Erfindung anhand von Beispielen näher erläutert.

### Beispiel 1

### 1.1. Herstellung einer erfindungsgemäßen Dispersion 1 von Nanopartikeln 1

30,1 kg eines handelsüblichen modifizierten aliphatischen, tetrafunktionellen Urethanacrylates mit einem zahlenmitteleren Molekulargewicht von 2500 (Sartomer CN925, Firma Craynor) wurden mit 1,7 kg eines handelsüblichen Dispergieradditivs auf Basis von Umsetzungsprodukten aus aminofunktionellen Polymeren, Polyestern und Polyethern (Dispergieradditiv LA-D1045 der Firma Evonik Degussa) und 8,2 kg eines handelsüblichen pyrogen hergestellten Siliciumdioxids mit einer BET-Oberfläche von 200 ± 25 m²/g, das mit Dimethyldichlorsilan silanisiert und anschließend gemäß WO04/020532 strukturmodifiziert wurde (AEROSIL® R 9200, Firma Evonik Degussa) vordispergiert. Hierzu wurde das Urethanacrylat Sartomer CN925 vorgelegt und das Dispergieradditiv LA-D1045 und das Siliciumdioxid AEROSIL® R 9200 wurden unter Rühren (500 U/min) langsam zugegeben. Anschließend wurde mit 900 U/min 15 Minuten lang dispergiert. Die Termperater der Mischung stieg dabei bis auf 75°C an. Zu 4 kg dieser so erhaltenen Vordispersion 1-1 wurden 50 g eines wieteren handelsüblichen Dispergieradditivs (TegoDispers® 655 der Firma Evonik Degussa) auf Basis von Phosphorsäureestern, die auf Polystyroloxid-block (b)-Polyalkylenoxid-Copolymeren basieren, zugegeben. Diese so erhaltene Vordispersion 1-2 wurde mit Hilfe einer Kugelmühle (Netzsch LabStar LS1, ZrO2 Mahlkörper, d=0,65 mm) 21 Stunden und 16 min bei einer Mahlguttemperatur von ca. 81 °C mit hohem Energieeintrag (Mahlraumdruck 1,5 bar, Leistungsaufnahme 27,73 kWh) vermahlen. Die genauen technischen Daten im Dispergierverlauf sind in der nachfolgenden Tabelle 1 aufgeführt:

**Tabelle 1: technische Daten des Dispergierverlaufs**

| Proben-Nr. | Laufzeit (min) | Drehzahl Rührwerk (1/min) | Mahlraumdruck (bar) | Mahlguttemperatur (°C) | Leistungsaufnahme (kWh) | Haze (%) der unbel. Besch. |
|---|---|---|---|---|---|---|
| Unb. PC.¹⁾ | | | | | | 0,2 |
| Disp.²⁾ | | | | | | 12,5 |
| 1 | 1 | 1000 | 1,5 | 41 | 0,01 | 6 |
| 2 | 10 | 2475 | 1,4 | 80 | 0,13 | 3,5 |
| 3 | 154 | 2474 | 1,8 | 86 | 3,26 | 1,1 |
| 4 | 236 | 2774 | 1,8 | 84 | 5,05 | 0,7 |
| 5 | 296 | 2774 | 1,5 | 83 | 6,44 | 0,6 |
| 6 | 486 | 2474 | 1,6 | 83 | 10,85 | 0,5 |
| 7 | 561 | 2474 | 1,6 | 84 | 12,48 | 0,4 |
| 8 | 906 | 2474 | 1,5 | 81 | 20,05 | 0,4 |
| 9 | 1106 | 2474 | 1,5 | 81 | 24,21 | 0,3 |
| 10 | 1276 | 2474 | 1,5 | 81 | 27,73 | 0,3 |
| 11 | 1396 | 2699 | 1,6 | 81 | 30,53 | 0,3 |

| | | | | | | |
|---|---|---|---|---|---|---|
| ¹⁾ unbeschichtetes Polycarbonatsubstrat ²⁾ Haze-Wert der Vordispersion | | | | | | |

Die so erhaltene erfindungsgemäße Dispersion 1 enthält sehr hohe Anteile an Siliciumdioxid-Teilchen mit einer Partikelgröße kleiner als 1000nm, wobei der d₅₀-Wert 150 nm ist und die Partikelgrößenverteilung der enthaltenen silanisierten, strukturmodifizierten Siliciumdioxid-Teilchen folgendermaßen ist:
weniger als 5 Gew.-% im Bereich von weniger als 80 nm,
88 Gew.-% im Bereich von 80 bis 300 nm,
3 Gew.-% im Bereich von mehr als 300 bis 1.000 nm und
4 Gew.-% im Bereich von mehr als 1.000 nm bis 10.000 nm.

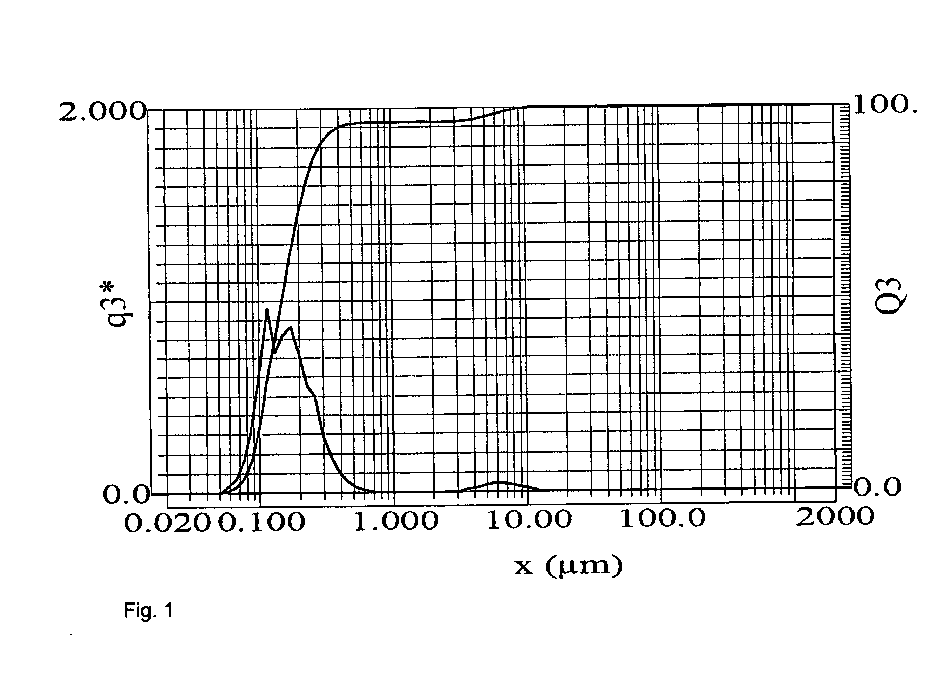

Die Fig. 1 zeigt die Partikelgrößenverteilung der enthaltenen silanisierten, strukturmodifizierten Siliciumdioxid-Teilchen. Neben der Partikelgröße x sind dort noch die Verteilungssumme Q3(x) und die Verteilungsdichte q3(x) aufgetragen.

Die so erhaltene erfindungsgemäße Dispersion 1 weist einen Gehalt von 20 Gew.-% Siliciumdioxid-Nanopartikel, bezogen auf das Gesamtgewicht der erfindungsgemäßen Dispersion 1, auf.

### 1.2. Herstellung der erfindungsgemäßen Beschichtungszusammensetzung 1

Die in Tabelle 2 angegebenen Bestandteile werden unter Rühren zu der erfindungsgemäßen Beschichtungszusammensetzung 1 formuliert.

### 2. Vergleichsbeispiel V1

### 2.1. Herstellung der nicht erfindungsgemäßen Beschichtungszusammensetzung V1

Die in Tabelle 2 angegebenen Bestandteile werden analog zu Beispiel 1 unter Rühren zu der nicht erfindungsgemäßen Beschichtungszusammensetzung V1 formuliert. Diese Beschichtungszusammensetzung V1 unterscheidet sich von der erfindungsgemäßen Beschichtungszusammensetzung 1 dadurch, dass anstelle der erfindungsgemäßen Dispersion der Nanopartikel 1 nun die handelsübliche Dispersion von Nanopartikeln Nanopol ® C784 (50%ige Dispersion von kolloidalem Kieselsäure-Sol in n-Butylacetat mit einer mittleren Partikelgröße der oberflächenmodifizierten Siliciumdioxid-Teilchen von 20 nm (Bestimmung durch SANS = Kleinwinkelneutronenstreuung)) der Firma Nanoresins eingesetzt wird.

**Tabelle 2: Zusammensetzung der Beschichtungszusammensetzungen 1 und V1**

| Bestandteil | Beispiel 1 Menge in g | Vergleichsbeispiel V1 Menge in g |
|---|---|---|
| n-Butanol | 4,5 | 4,5 |
| Ethanol | 13,6 | 13,6 |
| Isopropanol | 18,3 | 18,3 |
| Ethylacetat | 13,6 | 3,6 |
| Irgacure® 819 ¹⁾ | 0,3 | 0,3 |
| Irgacure® 184 ²⁾ | 1,12 | 1,12 |
| Byk UV 3570 ³⁾ | 0,4 | 0,4 |
| Bindemittel (A) =Sartomer CN925 ⁴⁾ | --- | 38,2 |
| Nanopartikel-Dispersion 1 mit 20% SiO2 (erfindungsgemäß) | 48,18 | --- |
| Nanopol ® C784 50%ig in Butylacetat (Vergleich) | --- | 20 |
| Summe | 100 | 100 |
| % FK (theoretisch) ⁵⁾ | 50 | 50 |
| Gehalt an SiO2 in %, bezogen auf FK (theoretisch) | 20 | 20 |
| Gehalt CN925, bezogen auf Gesamtzusammensetzung | 35,87 | 38,2 |

| | | |
|---|---|---|
| handelsüblicher Photoinitiator; Bis(2,4,6-trimethylbenzoyl)-phenyl-phosphinoxid ²⁾ handelsüblicher Photoinitiator; 1-Hydroxy-cyclohexyl-phenyl-keton ³⁾ handelsübliches Verlaufsadditiv für UV Lacke der Firma Byk ⁴⁾ handelsübliches modifizierten aliphatischen, tetrafunktionellen Urethanacrylates mit einem zahlenmitteleren Molekulargewicht von 2500 der Firma Craynor ⁵⁾ berechnet unter der Annahme, dass der Festkörper auch alle Additive umfasst, d.h. dass zum Festkörper alle Bestandteile außer Lösemittel gezählt werden | | |

### 3. Herstellung einer erfindungsgemäßen Beschichtung 1 und einer Beschichtung V1 des Vergleichsbeispiels V1

Die in Tabelle 1 beschriebene Beschichtungszusammensetzung 1 wurde mit einem 36 µm Stab-Rakel auf eine Polycarbonattafel appliziert. Anschließend wurde die Tafel in einem Ofen bei 80°C für 5 min getrocknet und nachfolgend mit UV- Licht in einer gängigen UV-Anlage (IST-Minicure, 2 Quecksilberlampen, 3,0 m/s Bandgeschwindigkeit) ausgehärtet. Die Dosis betrug 3,0 J/cm2.

### 4. Prüfung der erfindungsgemäßen Beschichtung 1 und der nicht erfindungsgemäßen Beschichtung V1

### 4.1. Beurteilung des Haze-Wertes

Von den beschichteten Polycarbonatsubstraten wurden direkt nach der Aushärtung der Beschichtung die Haze-Werte mit Hilfe des BYK-Gardner Gerätes Hazemeter AT-4727 ermittelt. Die Messergebnisse sind in Tabelle 3 aufgeführt.

### 4.2.Test der Abrasionsbeständigkeit

Die Kratzfestigkeit der Oberflächen wurde mit Hilfe des Taber-Tests untersucht. Der Taber-Test und die anschließende Haze Messung wurde in Anlehnung an ASTM D 1044-05 und ASTM D 1003-00 mit Hilfe des BYK-Gardner Gerätes Hazemeter AT-4727 durchgeführt, wobei die Proben vor der Messung nicht im Normklima bei 23°C und 50% relativer Luftfeuchte gelagert wurden und eine Absaugvorrichtung mit einer Öffnung von 8 mm anstelle der vorgeschriebenen 11 mm verwendet wurde. Die Messergebnisse sind in Tabelle 3 aufgeführt.

**Tabelle 3: Prüfergebnisse der Beschichtungen**

| | Haze (%) der unbelasteten Beschichtung | Haze (%) nach Taber Test |
|---|---|---|
| Erfindungsgemäße Beschichtung 1 | 0,3 | 6-7 |
| Nicht erfindungsgemäße Beschichtung V1 | 0,3 | 9-10 |

## Patentansprüche

1. Verfahren zur Beschichtung von Polycarbonatsubstraten, insbesondere von transparenten Polycarbonatsubstraten, bei dem ein transparentes Beschichtungsmittel umfassend (A) mindestens ein strahlungshärtendes Bindemittel mit mindestens zwei ethylenisch ungesättigten terminalen Gruppen, (B) Nanopartikel und (C) ggf. Lösemittel und/oder ggf. Reaktivverdünner, auf ein Polycarbonatsubstrat appliziert wird, **dadurch gekennzeichnet, dass**
(i) das Beschichtungsmittel Siliciumdioxid-Nanopartikel (B) enthält,
(ii) die Nanopartikel einen d₅₀-Wert zwischen 80 und 300 nm aufweisen und
(iii) die Nanopartikel (B) eine solche Partikelgrößenverteilung, bestimmt nach dem Prinzip der Laserbengung auf einem Laserdiffraktometer, haben, dass
weniger als 15 Gew.% der Teilchen eine Partikelgröße im Bereich von weniger als 80 nm,
75 bis 95 Gew.% der Teilchen eine Partikelgröße im Bereich von 80 bis 300 nm,
0 bis 5 Gew.% der Teilchen eine Partikelgröße im Bereich von mehr als 300 bis 1.000 nm und
0 bis 5 Gew.% der Teilchen eine Partikelgröße im Bereich von mehr als 1.000 nm bis 10.000 nm aufweisen
und
(iv) das Beschichtungsmittel mindestens ein Dispergieradditiv enthält.

2. Verfahren nach Anspruch 1, **dadurch gekennzeichnet, dass** die Nanopartikel (B) einen d₅₀-Wert zwischen 90 und 250 nm, insbesondere zwischen 100 und 200 nm, aufweisen und/oder eine solche Partikelgrößenverteilung haben, dass
weniger als 10 Gew.-% der Teilchen eine Partikelgröße im Bereich von weniger als 80 nm,
80 bis 90 Gew.-% der Teilchen eine Partikelgröße im Bereich von 80 bis 300 nm,
0 bis 5 Gew.-% der Teilchen eine Partikelgröße im Bereich von mehr als 300 bis 1.000 nm und
0 bis 5 Gew.-% der Teilchen eine Partikelgröße im Bereich von mehr als 1.000 nm bis 10.000 nm aufweisen.

3. Verfahren nach Anspruch 1 oder 2, **dadurch gekennzeichnet, dass** das Beschichtungsmittel Nanopartikel (B) auf Basis von silanisierten, pyrogen hergestellten Kieselsäuren, bevorzugt auf Basis von pyrogen hergestellten Kieselsäuren, die auf der Oberfläche fixierte Dimethylsilylgruppen und/der Monomethylsilylgruppen aufweisen, enthält.

4. Verfahren nach einem der Ansprüche 1 bis 3, **dadurch gekennzeichnet, dass** das Beschichtungsmittel 10 bis 40 Gew.-%, bevorzugt 15 bis 30 Gew.-%, ganz besonders bevorzugt 15 bis 25 Gew.%, jeweils bezogen auf das Gewicht des Bestandteils (A) plus dem Gewicht der Nanopartikel (B) plus dem Gewicht des ggf. eingesetzten Reaktiwerdünners, der Nanopartikel (B) und/oder 0 bis 40 Gew.-%, bevorzugt 10 bis 30 Gew.-%, jeweils bezogen auf das Gewicht der Nanopartikel, eines oder mehrerer Dispergieradditive enthält.

5. Verfahren nach einem der Ansprüche 1 bis 4, **dadurch gekennzeichnet, dass** das Beschichtungsmittel mindestens ein Dispergieradditiv (D1) auf Basis eines Phosphorsäureesters, der auf Polystyroloxid-block (b)-Polyalkylenoxid-Copolymeren basiert, enthält.

6. Verfahren nach einem der Ansprüche 1 bis 5, **dadurch gekennzeichnet, dass** das Beschichtungsmittel mindestens ein Dispergieradditiv (D1) auf der Basis eines Phosphorsäureesters, der auf Polystyroloxid-block (b)-Polyalkylenoxid-Copolymeren basiert, der allgemeinen Strukturformel (II)
[RO(SO)ₐ(EO)_{b}(CH₂CHCH₃O)_{c}(BO)_{d}]ₓP(O)(OH)₃₋ₓ (II)
enthält, wobei
R = geradkettiger oder verzweigter oder cycloaliphatischer Rest mit 1 bis 22 Kohlenstoffatomen, bevorzugt R = Isononylrest oder Butylrest
SO = Styroloxid,
EO = Ethylenoxid,
BO = Butylenoxid und
a = bis < 2,
b = 3 bis 100,
c = 0 bis 10,
d = 0 bis 3,
x = und
b >= a+c+d ist.

7. Verfahren nach einem der Ansprüche 1 bis 6, **dadurch gekennzeichnet, dass** das Beschichtungsmittel eine Mischung aus mindestens einem Dispergieradditiv (D1) auf Basis eines Phosphorsäureesters, der auf Polystyroloxid-block (b)-Polyalkylenoxid-Copolymeren basiert, und mindestens einem von (D1) verschiedenem Dispergieradditiv (D2) enthält.

8. Verfahren nach einem der Ansprüche 1 bis 7, **dadurch gekennzeichnet, dass** das Beschichtungsmittel mindestens ein Dispergieradditiv (D2) auf Basis von Umsetzungsprodukten aus aminofunktionellen Polymeren, Polyestern und Polyethern enthält.

9. Beschichtungsmittel enthaltend (A) mindestens ein strahlungshärtendes Bindemittel mit mindestens zwei ethylenisch ungesättigten terminalen Gruppen, (B) Nanopartikel und (C) ggf. Lösemittel und/- oder ggf. Reaktivverdünner, **dadurch gekennzeichnet, dass**
(i) das Beschichtungsmittel Siliciumdioxid-Nanopartikel (B) enthält,
(ii) die Nanopartikel einen d₅₀-Wert zwischen 80 und 300 nm aufweisen und
(iii) die Nanopartikel (B) eine solche Partikelgrößenverteilung haben, dass
weniger als 15 Gew.% der Teilchen eine Partikelgröße im Bereich von weniger als 80 nm,
75 bis 95 Gew.% der Teilchen eine Partikelgröße im Bereich von 80 bis 300 nm,
0 bis 5 Gew.% der Teilchen eine Partikelgröße im Bereich von mehr als 300 bis 1.000 nm und
0 bis 5 Gew.% der Teilchen eine Partikelgröße im Bereich von mehr als 1.000 nm bis 10.000 nm aufweisen
und
(iv) das Beschichtungsmittel mindestens ein Dispergieradditiv enthält.

10. Beschichtungsmittel nach Anspruch 9, **dadurch gekennzeichnet, dass** es mindestens ein Dispergieradditiv (D1) auf Basis eines Phosphorsäureesters, der auf Polystyroloxid-block (b)-Polyalkylenoxid-Copolymeren basiert, bevorzugt mindestens ein Dispergieradditiv (D1) der allgemeinen Strukturformel (II)
[RO(SO)ₐ(EO)_{b}(CH₂CHCH₃O)_{c}(BO)_{d}]ₓP(O)(OH)₃₋ₓ (II)
enthält, wobei R, SO, EO, BO, a, b, c, d und x die oben angegebene Bedeutung und die oben angegebenen Werte haben.

11. Beschichtungsmittel nach Anspruch 9 oder 10, **dadurch gekennzeichnet, dass** es mindestens ein von (D1) verschiedenes Dispergieradditiv (D2), bevorzugt mindestens ein Dispergieradditiv (D2) auf Basis von Umsetzungsprodukten aus aminofunktionellen Polymeren, Polyestern und Polyethern, enthält.

12. Beschichtetes Polycarbonatsubstrat erhältlich durch ein Verfahren gemäß einem oder mehreren der Ansprüche 1 bis 8.

13. Beschichtetes Polycarbonatsubstrat gemäß Anspruch 12, wobei es sich um Platten, Fenster, Brillengläser, optische Linsen, Teile von Kraftfahrzeugen, wie Motorräder, Busse, LKW oder PKW, Nutzfahrzeugen und/oder Flugzeugteile, Reflektoren, Straßenreflektoren, Abdeckungen, Compact Discs, Digital Versatile Discs oder Digital Video Discs handelt.

14. Beschichtetes Polycarbonatsubstrat gemäß Anspruch 12, wobei es sich um Teile von Scheinwerfern und/oder Scheiben von Fahrzeugen, insbesondere Automobilen, und/oder Flugzeugen handelt.

## Claims

1. Method of coating polycarbonate substrates, more particularly transparent polycarbonate substrates, by applying to a polycarbonate substrate a transparent coating composition comprising (A) at least one radiation-curing binder having at least two ethylenically unsaturated terminal groups, (B) nanoparticles, and (C) optionally solvents and/or optionally reactive diluents, **characterized in that**
(i) the coating composition comprises silicon dioxide nanoparticles (B),
(ii) the nanoparticles have a d₅₀ of between 80 and 300 nm, and
(iii) the nanoparticles (B) have a particle size distribution, determined in accordance with the principle of laser diffraction on a laser diffractometer, such that
less than 15% by weight of the particles have a size in the range of less than 80 nm,
75% to 95% by weight of the particles have a size in the range from 80 to 300 nm,
0% to 5% by weight of the particles have a size in the range from more than 300 to 1000 nm, and
0% to 5% by weight of the particles have a size in the range from more than 1000 nm to 10 000 nm,
and
(iv) the coating composition comprises at least one dispersing additive.

2. Method according to Claim 1, **characterized in that** the nanoparticles (B) have a d50 of between 90 and 250 nm, more particularly between 100 and 200 nm, and/or have a particle size distribution such that
3. less than 10% by weight of the particles have a size in the range of less than 80 nm,
4. 80% to 90% by weight of the particles have a size in the range from 80 to 300 nm,
5. 0% to 5% by weight of the particles have a size in the range from more than 300 to 1000 nm, and
6. 0% to 5% by weight of the particles have a size in the range from more than 1000 nm to 10 000 nm.

3. Method according to Claim 1 or 2, **characterized in that** the coating composition comprises nanoparticles (B) based on silanized, pyrogenically prepared silicas, preferably based on pyrogenically prepared silicas which have dimethylsilyl groups and/or monomethylsilyl groups fixed on the surface.

4. Method according to any of Claims 1 to 3, **characterized in that** the coating composition contains 10% to 40%, preferably 15% to 30%, very preferably 15% to 25%, by weight, based in each case on the weight of constituent (A) plus the weight of nanoparticles (B) plus the weight of reactive diluent if used, of the nanoparticles (B), and/or 0% to 40% by weight, preferably 10% to 30% by weight, based in each on the weight of the nanoparticles, of one or more dispersing additives.

5. Method according to any of Claims 1 to 4, **characterized in that** the coating composition comprises at least one dispersing additive (D1) based on a phosphoric ester which is based on polystyrene oxide-block (b)-polyalkylene oxide copolymers.

6. Method according to any of Claims 1 to 5, **characterized in that** the coating composition comprises at least one dispersing additive (D1) based on a phosphoric ester which is based on polystyrene oxide-block (b)-polyalkylene oxide copolymers, of the general structural formula (II)
[RO(SO)ₐ(EO)_{b}(CH₂CHCH₃O)_{c}(BO)_{d}]ₓP(O)(OH)₃₋ₓ (II)
where
R = straight-chain or branched or cycloaliphatic radical having 1 to 22 carbon atoms, preferably R = isononyl radical or butyl radical,
SO =styrene oxide,
EO =ethylene oxide,
BO =butylene oxide, and
a = 1 to < 2,
b = 3 to 100,
c = 0 to 10,
d = 0 to 3,
x = 1 or 2, and
b >= a+c+d.

7. Method according to any of Claims 1 to 6, **characterized in that** the coating composition comprises a mixture of at least one dispersing additive (D1) based on a phosphoric ester which is based on polystyrene oxide-block (b)-polyalkylene oxide copolymers, and at least one non-(D1) dispersing additive (D2).

8. Method according to any of Claims 1 to 7, **characterized in that** the coating composition comprises at least one dispersing additive (D2) based on reaction products of amino-functional polymers, polyesters, and polyethers.

9. Coating composition comprising (A) at least one radiation-curing binder having at least two ethylenically unsaturated terminal groups, (B) nanoparticles, and (C) optionally solvents and/or optionally reactive diluents, **characterized in**
(i) the coating composition comprises silicon dioxide nanoparticles (B),
(ii) the nanoparticles have a d₅₀ of between 80 and 300 nm, and
(iii) the nanoparticles (B) have a particle size distribution such that
less than 15% by weight of the particles have a size in the range of less than 80 nm,
75% to 95% by weight of the particles have a size in the range from 80 to 300 nm,
0% to 5% by weight of the particles have a size in the range from more than 300 to 1000 nm, and
0% to 5% by weight of the particles have a size in the range from more than 1000 nm to 10 000 nm, and
(iv) the coating composition comprises at least one dispersing additive.

10. Coating composition according to Claim 9, **characterized in that** it comprises at least one dispersing additive (D1) based on a phosphoric ester which is based on polystyrene oxide-block (b)-polyalkylene oxide copolymers, preferably at least one dispersing additive (D1) of the general structural formula (II)
[RO(SO)ₐ(EO)_{b}(CH₂CHCH₃O)_{c}(BO)_{d}]ₓP(O)(OH)₃₋ₓ (II)
where R, SO, EO, BO, a, b, c, d and x have the definition and values specified above.

11. Coating composition according to Claim 9 or 10, **characterized in that** it comprises at least one dispersing additive (D2) which is different from (D1), preferably at least one dispersing additive (D2) based on reaction products of amino-functional polymers, polyesters, and polyethers.

12. Coated polycarbonate substrate obtainable by a method according to one or more of Claims 1 to 8.

13. Coated polycarbonate substrate according to Claim 12, the substrates in question being sheets, windows, spectacle lenses, optical lenses, parts of motor vehicles, such as motorbikes, buses, trucks or automobiles, utility vehicles and/or aircraft parts, reflectors, including road reflectors, covers, compact discs, digital versatile discs or digital video discs.

14. Coated polycarbonate substrate according to Claim 12, the substrates in question being parts of headlights and/or glazing elements of vehicles, especially automobiles, and/or aircraft.

## Revendications

1. Procédé pour le revêtement de substrats en polycarbonate, en particulier de substrats transparents en polycarbonate, dans lequel un agent de revêtement transparent, comprenant (A) au moins un liant durcissant sous l'effet d'un rayonnement présentant au moins deux groupes terminaux éthyléniquement insaturés, (B) des nanoparticules et (C) le cas échéant un solvant et/ou le cas échéant un diluant réactif, est appliqué sur un substrat en polycarbonate, **caractérisé en ce que**
(i) l'agent de revêtement contient des nanoparticules de dioxyde de silicium (B),
(ii) les nanoparticules présentent une valeur d₅₀ entre 80 et 300 nm et
(iii) les nanoparticules (B) présentent une répartition des grosseurs des particules, déterminée selon le principe de la diffraction d'un rayon laser sur un diffractomètre à rayon laser, telle que
moins de 15% en poids des particules présentent une grosseur des particules dans la plage de moins de 80 nm,
75 à 95% en poids des particules présentent une grosseur des particules dans la plage de 80 à 300 nm,
0 à 5% en poids des particules présentent une grosseur des particules dans la plage de plus de 300 jusqu'à 1000 nm et
0 à 5% en poids des particules présentent une grosseur des particules dans la plage de plus de 1000 jusqu'à 10000 nm
et
(iv) l'agent de revêtement contient au moins un additif de dispersion.

2. Procédé selon la revendication 1, **caractérisé en ce que** les nanoparticules (B) présentent une valeur d₅₀ entre 90 et 250 nm, en particulier entre 100 et 200 nm, et/ou présentent une répartition des grosseurs des particules telle que
moins de 10% en poids des particules présentent une grosseur des particules dans la plage de moins de 80 nm,
80 à 90% en poids des particules présentent une grosseur des particules dans la plage de 80 à 300 nm,
0 à 5% en poids des particules présentent une grosseur des particules dans la plage de plus de 300 jusqu'à 1000 nm et
0 à 5% en poids des particules présentent une grosseur des particules dans la plage de plus de 1000 jusqu'à 10000 nm.

3. Procédé selon la revendication 1 ou 2, **caractérisé en ce que** l'agent de revêtement contient des nanoparticules (B) à base de silices silanisées, préparées par voie pyrogène, de préférence à base de silices préparées par voie pyrogène, qui présentent des groupes diméthylsilyle et/ou des groupes monométhylsilyle fixés sur la surface.

4. Procédé selon l'une quelconque des revendications 1 à 3, **caractérisé en ce que** l'agent de revêtement contient 10 à 40% en poids, de préférence 15 à 30% en poids, de manière tout particulièrement préférée 15 à 25% en poids, à chaque fois par rapport au poids du constituant (A) plus le poids des nanoparticules (B) plus le poids du diluant réactif le cas échéant utilisé, de nanoparticules (B) et/ou 0 à 40% en poids, de préférence 10 à 30% en poids, à chaque fois par rapport au poids des nanoparticules, d'un ou de plusieurs additifs de dispersion.

5. Procédé selon l'une quelconque des revendications 1 à 4, **caractérisé en ce que** l'agent de revêtement contient au moins un additif de dispersion (D1) à base d'un ester de l'acide phosphorique, qui est basé sur des copolymères de poly(oxyde de styrène)-bloc (b)-poly(oxyde d'alkylène).

6. Procédé selon l'une quelconque des revendications 1 à 5, **caractérisé en ce que** l'agent de revêtement contient au moins un additif de dispersion (D1) à base d'un ester de l'acide phosphorique, qui est basé sur des copolymères de poly(oxyde de styrène)-bloc (b)-poly(oxyde d'alkylène), de formule de structure générale (II)
[RO(SO)ₐ(EO)_{b}(CH₂CHCH₃O)_{c}(BO)_{d}]ₓP(O)(OH)₃₋ₓ (II)
où
R = un radical linéaire ou ramifié ou cycloaliphatique comprenant 1 à 22 atomes de carbone, de préférence R = un radical isononyle ou butyle
SO = oxyde de styrène,
EO = oxyde d'éthylène,
BO = oxyde de butylène et
a = jusqu'à < 2,
b = 3 à 100,
c = 0 à 10,
d = 0 à 3,
x = 1 ou 2 et
b ≥ a+c+d.

7. Procédé selon l'une quelconque des revendications 1 à 6, **caractérisé en ce que** l'agent de revêtement contient un mélange d'au moins un additif de dispersion (D1) à base d'un ester de l'acide phosphorique, qui est basé sur des copolymères de poly(oxyde de styrène)-bloc (b)-poly(oxyde d'alkylène) et d'au moins un additif de dispersion (D2) différent de (D1).

8. Procédé selon l'une quelconque des revendications 1 à 7, **caractérisé en ce que** l'agent de revêtement contient au moins un additif de dispersion (D2) à base de produits de transformation constitués par des polymères à fonctionnalité amino, de polyesters et des polyéthers.

9. Agent de revêtement comprenant (A) au moins un liant durcissant sous l'effet d'un rayonnement présentant au moins deux groupes terminaux éthyléniquement insaturés, (B) des nanoparticules et (C) le cas échéant un solvant et/ou le cas échéant un diluant réactif, **caractérisé en ce que**
(i) l'agent de revêtement contient des nanoparticules de dioxyde de silicium (B),
(ii) les nanoparticules présentent une valeur d₅₀ entre 80 et 300 nm et
(iii) les nanoparticules (B) présentent une répartition des grosseurs des particules telle que
moins de 15% en poids des particules présentent une grosseur des particules dans la plage de moins de 80 nm,
75 à 95% en poids des particules présentent une grosseur des particules dans la plage de 80 à 300 nm,
0 à 5% en poids des particules présentent une grosseur des particules dans la plage de plus de 300 jusqu'à 1000 nm et
0 à 5% en poids des particules présentent une grosseur des particules dans la plage de plus de 1000 jusqu'à 10000 nm
et
(iv) l'agent de revêtement contient au moins un additif de dispersion.

10. Agent de revêtement selon la revendication 9, **caractérisé en ce qu'**il contient au moins un additif de dispersion (D1) à base d'un ester de l'acide phosphorique, qui est basé sur des copolymères de poly(oxyde de styrène)-bloc (b)-poly(oxyde d'alkylène), de préférence au moins un additif de dispersion (D1) de formule de structure générale (II)
[RO(SO)ₐ(EO)_{b}(CH₂CHCH₃O)_{c}(BO)_{d}]ₓP(O)(OH)₃₋ₓ (II)
où R, SO, EO, BO, a, b, c, d et x présentent la signification indiquée ci-dessus et les valeurs indiquées ci-dessus.

11. Agent de revêtement selon la revendication 9 ou 10, **caractérisé en ce qu'**il contient au moins un additif de dispersion (D2) différent de (D1), de préférence au moins un additif de dispersion (D2) à base de produits de transformation constitués par des polymères à fonctionnalité amino, des polyesters et des polyéthers.

12. Substrat en polycarbonate revêtu, pouvant être obtenu par un procédé selon l'une ou plusieurs des revendications 1 à 8.

13. Substrat en polycarbonate revêtu selon la revendication 12, où il s'agit de plaques, de fenêtres, de verres pour lunettes, de lentilles optiques, de pièces de véhicules automoteurs, tels que les motocyclettes, les bus, les poids lourds ou les voitures de tourisme, les véhicules utilitaires et/ou de pièces pour avions, de réflecteurs, de réflecteurs de rue, de recouvrements, de disques compacts, de disques numériques universels ou de disques vidéonumériques.

14. Substrat en polycarbonate revêtu selon la revendication 12, où il s'agit de pièces de phares et/ou de vitres de véhicules, en particulier d'automobiles, et/ou d'avions.
